# EUROPEAN PATENT APPLICATION

(11) **EP 4 394 002 A1**
(43) Date of publication of application: **03.07.2024**
(21) Application number: 22906662.6
(22) Date of filing: 15.12.2022
(51) Int. Cl.: C09C 1/36, C09C 3/06, C09C 3/10, C01G 23/053, G02F 1/167

(54) **ELECTROPHORETIC PARTICLE AND PREPARATION METHOD THEREFOR AND APPLICATION THEREOF**

(30) Priority: 17.12.2021 CN 202111550520
(71) Applicant: Shenzhen Av-Display Co., Ltd., Shenzhen, Guangdong 518000 (CN)
(72) Inventor: WU, Zirong, Shenzhen, Guangdong 518000 (CN); HONG, Junbin, Shenzhen, Guangdong 518000 (CN); WANG, Hongling, Shenzhen, Guangdong 518000 (CN)
(74) Representative: Santoro, Sofia
(86) International application number: PCT/CN2022/139379
(87) International publication number: WO 2023/109917

(57) **Abstract**

The present application relates to the technical field of electrophoretic particles, more particularly to an electrophoretic particle, a preparation method therefor, and an application thereof. Provided is an electrophoretic particle. The electrophoretic particle includes a shell layer and a core layer, which is wrapped in the shell layer. The core layer includes a plurality of core particles, and the density of the core particles is lower than a density of the shell layer. The electrophoretic particle includes the shell layer and the core layer wrapped in the shell layer, the core layer includes the plurality of core particles, and the structure of the plurality of the core particles makes the shell layer wrapping on surfaces of the plurality of the core particles form a folded structure, thus increasing a surface area of the core layer and improving the bonding tightness between the shell layer and the core layer, and making the shell layer of the resulting electrophoretic particle have relatively strong tightness. Based on this, an overall particle size of each electrophoretic particle can be appropriately reduced, the moving velocity of the electrophoretic particle under the action of the electric field can be improved, and it is ensured such electrophoretic particle will never have the light leakage problem, thereby improving the excellent performance of a device.

## Description

This application claims the priority of Chinese patent application No. 202111550520.6 and titled "ELECTROPHORETIC PARTICLE AND PREPARATION METHOD THEREFOR AND APPLICATION THEREOF" filed with CNIPA on December 17, 2021, the entire contents of which are hereby incorporated by reference.

### TECHNICAL FIELD

The application relates to the technical field of electrophoretic particles, and more particularly to an electrophoretic particle, a preparation method therefor, and an application thereof.

### BACKGROUND

Due to advantages of energy saving or low energy consumption, good sunlight readability, low production cost, and flexible manufacturing, electrophoretic display technology has stood out from many display technologies and has become one of flexible electronic display technologies having great development potentials. The display principle of the electrophoretic display technology is that charged electrophoretic particles of different colors move under the action of an electric field, thus displaying a desired pattern.

Electrophoretic particles in core-shell structures can effectively reduce a density thereof making the density of the electrophoretic particles closer to the density of an electrophoretic fluid, so that the electrophoretic particles have the advantages of excellent bistability and short response time, making them very popular.

Core-shell structured particles generally adopt two display modes, that is, core display mode and shell layer display mode. In the core display mode, the existence of a transparent shell layer often results in serious light leakage, thus the core-shell structured particles generally adopt the shell layer display mode. For the core-shell structured particles adopting the shell layer display mode, high requirements are imposed on the properties and thickness of the shell layer material. In addition to avoiding the occurrence of the light leakage, it is also necessary to control the volume and the density of the material to ensure the stability of the core-shell structured particles. However, in the actual preparation process, it is often difficult to balance the characteristics of core-shell structured particles in various aspects, so that the properties of core-shell structured particles are prone to defects such as light leakage, or poor stability caused by high density, resulting in insufficient application effects in the display field.

### SUMMARY OF THE INVENTION

### TECHNICAL PROBLEMS

An object of the present application is to provide an electrophoretic particle and a preparation method therefor and an application thereof, aiming at solving the problems in the prior art that the electrophoretic particle having the core-shell structure cannot well control the thickness of the shell layer, resulting in poor stability and poor use effect of the particle.

### TECHNICAL SOLUTIONS TO PROBLEMS

### TECHNICAL SOLUTIONS

In order to achieve the above object, technical solutions adopted in the present application are as follows:
In a first aspect, the present application provides an electrophoretic particle. The electrophoretic particle comprises a shell layer and a core layer wrapped in the shell layer. The core layer comprises a plurality of core particles, and the density of the core particles is lower than that of the shell layer.

In some embodiments, in the core layer, voids exist among the plurality of core particles.

In some embodiments, a volume of the voids account for 5% to 15% of a volume of the core layer.

In some embodiments, a volume of the core layer accounts for 30% to 80% of a volume of the electrophoretic particle.

In some embodiments, the density of the plurality of core particles is lower than or equal to a half of the density of the shell layer.

In some embodiments, the density of the shell layer is 3 g/cm³ to 5.6 g/cm³.

In some embodiments, the density of the plurality of core particles is 1 g/cm³ to 2.8g/cm³.

In some embodiments, the electrophoretic particle has a particle size of 300 nm to 1000 nm.

In some embodiments, each of the plurality of core particles has a particle size of 10 nm to 50 nm.

In some embodiments, a material of the shell layer has a visible light reflectivity of greater than 70%, or the material of the shell layer has a visible light absorptivity of greater than 80%.

In some embodiments, the material of the shell layer comprises an inorganic pigment, and the core particles comprise inorganic particles or organic particles.

In some embodiments, a material of the inorganic particle comprises silicon dioxide.

In some embodiments, a material of the organic particles comprises at least one of polymethylmethacrylate, polystyrene, and polyvinylpyrrolidone.

In some embodiments, the inorganic pigment comprises at least one of titanium dioxide, zirconium oxide, zinc oxide, copper chrome black, and iron manganese black.

In a second aspect, the present application provides a method for preparing electrophoretic particles, the method comprises the following steps:
providing the plurality of core particles and a precursor material for preparing the shell layer; and
dispersing the plurality of core particles in an organic solvent to obtain a first core particle dispersion; mixing the precursor material and an organic solvent to obtain a first precursor material mixed solution; and dropping the first precursor material mixed solution into the first core particle dispersion for mixing and heating reaction to obtain electrophoretic particles;
or alternatively,
providing the plurality of core particles and a precursor material for preparing the shell layer; and
dispersing the plurality of core particles and an organic solvent to obtain a second core particle dispersion having a saturated concentration; mixing the precursor material with an organic solvent to obtain a second precursor material mixed solution, wherein the second precursor material mixed solution has a mass percent concentration of 5% to 35%; and dropping the second core particle dispersion into the second precursor material mixed solution for mixing and heating reaction to obtain electrophoretic particles.

In some embodiments, the precursor material comprises any one or more of ethyl titanate, isopropyl titanate, tetrabutyl titanate, titanium tetrachloride, zirconium propanol, ferric chloride, ferrous sulfate, zinc nitrate, zinc chloride, zinc sulfate, copper nitrate, and chromium nitrate.

In some embodiments, the first core particle dispersion is further subjected to an ultrasonic treatment, wherein a duration for the ultrasonic treatment is 20 mins to 2 hrs.

In some embodiments, a rate of the dropping is controlled at 0.1 mL/s to 0.12 mL/s.

In some embodiments, a temperature of the mixing and heating reaction is 50°C to 55°C.

In some embodiments, a duration for the mixing and heating reaction is 24 hrs to 26 hrs.

In a third aspect, the present application provides an electrophoretic display liquid. The electrophoretic display liquid comprises electrophoretic particles, in which, the electrophoretic particles are selected from the above-mentioned electrophoretic particles or prepared by the above-mentioned method for preparing the electrophoretic particles.

In a fourth aspect, the present application provides display electronic paper. The display electronic paper comprises electrophoretic particles, in which, the electrophoretic particles are selected from the above-mentioned electrophoretic particles or prepared by the above-mentioned method for preparing the electrophoretic particles.

The electrophoretic particle provided by the first aspect of the embodiments of the present application includes the shell layer and the core layer wrapped in the shell layer, the core layer includes the plurality of core particles, and the structure of the plurality of the core particles makes the shell layer wrapping on surfaces of the plurality of the core particles form a folded structure, thus increasing a surface area of the core layer; moreover, the number of groups on the surfaces of the core particles and the corresponding binding groups on the shell layer increases, which improves the bonding tightness between the shell layer and the core layer, and makes the shell layer of the resulting electrophoretic particle have relatively strong tightness. Based on this, an overall particle size of each electrophoretic particle can be appropriately reduced, the moving velocity of the electrophoretic particle under the action of the electric field can be improved, and it is ensured such electrophoretic particle will never have the light leakage problem. Furthermore, the density of the plurality of core particles is lower than the density of the shell layer, which makes the density of the prepared electrophoretic particle even smaller, thereby slowing down a deposition velocity of the electrophoretic particle when the electric field is removed, improving the dispersion stability of the electrophoretic particles, and making a resulting device have a better steady-state effect.

The preparation method for the electrophoretic particles provided in the second aspect of the embodiments of the present application includes two different preparation ways. In particular, in the first preparation way, the core particle dispersion and the precursor material mixed solution for preparing the shell layer are separately obtained; then the precursor material mixed solution is dropped into the core particle dispersion, and a resulting mixture were heated to promote the deposition of the precursor material onto the surfaces of the core particles so as to form a single shell layer, whereby obtaining the electrophoretic particles. In the second preparation way, the core particle dispersion having the saturated concentration and the precursor material mixed solution used for preparing the shell layer are separately provided, and the core particle dispersion having the saturated concentration is dropped into the precursor material mixed solution having a relatively low concentration, the particle dispersion does not diffuse rapidly, so that the high concentration solution and the low concentration solution are mixed into a homogeneous solution, and it can be ensured that electrophoretic particles each containing multiple core particles are formed. Both the two preparation ways are simple, convenient, and easy to operate. By using the preparation method, electrophoretic particles being sensitive in movement and having strong dispersion stability without light leakage can be prepared, which is suitable for large-scale preparation.

The electrophoretic display liquid provided by the third aspect of the present application includes the above-mentioned electrophoretic particles that are sensitive in movement and have strong dispersion stability without light leakage. Therefore, the obtained electrophoretic display liquid has excellent performance and is conducive to wide application.

The display electronic paper provided by the fourth aspect of the present application includes the above-mentioned electrophoretic particles that are sensitive in movement and have strong dispersion stability without light leakage. Therefore, the obtained display electronic paper has excellent display effect and is conducive to wide application.

### BENEFICIAL EFFECT OF THE INVENTION

### BRIEF DESCRIPTION OF THE DRAWINGS

### DESCRIPTION OF THE DRAWINGS

In order to more clearly illustrate the technical solutions in embodiments of the present application, the accompanying drawings that need to be used in the descriptions of the embodiments or the prior art will be briefly introduced below. Obviously, the accompanying drawings in the following description are only some embodiments of the present application, those of ordinary skill in the art can also obtain other drawings based on these drawings without any creative effort.

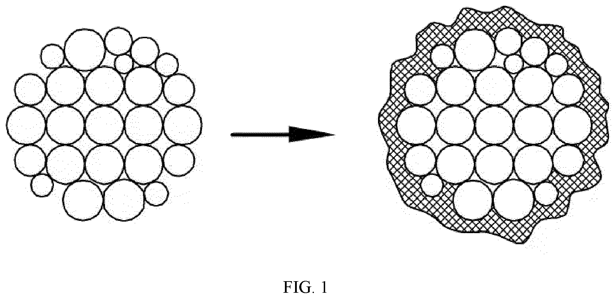

FIG. 1 is a schematic diagram of a preparation method of electrophoretic particles provided by embodiments of the present application.

### EMBODIMENTS OF THE INVENTION

### IMPLEMENTATION MANNER OF THE INVENTION

In order to make the technical problems to be solved, technical solutions, and beneficial effects in the present application clearer, the present application will be further described in detail below in conjunction with the embodiments. It should be understood that the specific embodiments described here are only used to explain the present application, and are not intended to limit the present application.

In the present application, the term "and/or" describes the association relationship of associated objects, indicating that there may be three relationships, for example, A and/or B may mean the following conditions: A exists alone, A and B exist simultaneously, and B exists alone, in which, A and B can be singular or plural. The character "/" generally indicates that the associated objects are in an "or" relationship.

In the present application, "at least one" means one or more, and "multiple/plurality of" means two or more. "At least one of the following" or similar expressions refer to any combination of these items, including any combination of single or plural items. For example, "at least one of a, b, or c", or "at least one of a, b, and c" can mean: a, b, c, a-b ( That is, a and b), a-c, b-c, or a-b-c, in which, a, b, and c can be single or plural.

It should be understood that in various embodiments of the present application, the sequence numbers of the above-mentioned processes do not mean the order of execution, and some or all steps may be executed in parallel or sequentially, and the execution order of each process shall be determined according to its functions and internal logic and should not constitute any limitation to the implementation process of the embodiments of the present application.

Terms used in the embodiments of the present application are only for the purpose of describing specific embodiments, and are not intended to limit the present application. The singular forms "a" and "the" used in the embodiments of the present application and the appended claims are also intended to include plural forms unless otherwise indicated clearly in the context.

The weight or mass of the relevant components mentioned in the description of the embodiments of the present application can not only refer to the specific content of each component, but also represent the proportional relationship between the weights or masses of the various components. The scaling up or down of the contents of the related components are within the scope disclosed in the description of the embodiments of the present application. Specifically, the weight or mass in the description of the embodiments of the present application may be µg, mg, g, kg and other well-known mass units in the chemical industry.

The terms "first" and "second" are only used for descriptive purposes to distinguish objects such as substances from each other, and cannot be understood as indicating or implying relative importance or implicitly specifying the quantity of indicated technical features. For example, without departing from the scope of the embodiments of the present application, a first XX can also be called a second XX, and similarly, a second XX can also be called a first XX. Thus, a feature defined as "first" and "second" may explicitly or implicitly include one or more of these features.

A first aspect of embodiments of the present application provides an electrophoretic particle. The electrophoretic particle comprises a shell layer and a core layer wrapped in the shell layer, the core layer comprises a plurality of core particles, and a density of the plurality of core particles is lower than a density of the shell layer.

The electrophoretic particle provided by the first aspect of the embodiments of the present application includes the shell layer and the core layer wrapped in the shell layer, the core layer includes the plurality of core particles, and the structure of the plurality of the core particles makes the shell layer wrapping on surfaces of the plurality of the core particles form a folded structure, thus increasing a surface area of the core layer; moreover, the number of groups on the surfaces of the core particles and the corresponding binding groups on the shell layer increases, which improves the bonding tightness between the shell layer and the core layer, and makes the shell layer of the resulting electrophoretic particle have relatively strong tightness. Based on this, an overall particle size of each electrophoretic particle can be appropriately reduced, the moving velocity of the electrophoretic particle under the action of the electric field can be improved, and it is ensured such electrophoretic particle will never have the light leakage problem. Furthermore, the density of the plurality of core particles is lower than the density of the shell layer, which makes the density of the prepared electrophoretic particle even smaller, thereby slowing down a deposition velocity of the electrophoretic particle when the electric field is removed, improving the dispersion stability of the electrophoretic particles, and making a resulting device have a better steady-state effect.

In some embodiments, the density of the core particles is lower than the density of the shell layer, thereby reducing the density of the resulting electrophoretic particle and increasing the moving velocity of the electrophoretic particles.

In some embodiments, in the core layer, voids exist among the plurality of core particles. As there are voids existing between the core particles, and the voids are filled with air, it is conducive to reducing the density of the entire core layer, making the density of the resulting core layer smaller than that of the core particles, thereby reducing the density of the electrophoretic particle and slowing down a deposition velocity of the electrophoretic particle when the electric field is removed, improving the dispersion stability of the electrophoretic particles, and making a resulting device have a better steady-state effect.

In some embodiments, a volume of the voids account for 5% to 15% of a volume of the core layer. By controlling a volume ratio of voids in the core layer, the density and stability of the core layer are further controlled. If the volume ratio of the voids in the core layer is smaller, the density of the core layer is greater, and the stability of the resulting core layer is higher; and if the volume ratio of the voids in the core layer is larger, the density of the core layer is smaller, while the stability of the resulting core layer is correspondingly lowered, and the core layer has a potential risk of collapsing, which is not conducive to the formation of electrophoretic particle.

In some specific embodiments, the total volume of the voids account for 5%, 6%, 7%, 8%, 9%, 10%, 11%, 12%, 13%, 14%, and 15% of the volume of the core layer.

In some embodiments, a volume of the core layer accounts for 30% to 80% of a volume of the electrophoretic particle. Specifically, the proportion of the core layer is mainly determined according to the diameter of the electrophoretic particle. If the diameter of the electrophoretic particle is relatively small, the proportion of the core layer will be relatively small, which avoids the phenomenon of light leakage of the electrophoretic particle. If the diameter of the electrophoretic particle is relatively large, the proportion of the core layer will increase accordingly, which reduces the density of the electrophoretic particle and increases the moving velocity of the electrophoretic particle under the action of the electric field.

In some specific embodiments, the volume of the core layer may account for 30%, 35%, 40%, 45%, 50%, 55%, 60%, 65%, 70%, 75%, or 80% of the volume of the electrophoretic particle.

In some embodiments, the density of the plurality of core particles is lower than or equal to a half of the density of the shell layer. By strictly control the density of the core particles, the density of the resulting electrophoretic particle is ensured to be small, which slows down the deposition velocity of the electrophoretic particle when the electric field is removed, improves the dispersion stability of the electrophoretic particles, and makes a resulting device have a better steady-state effect.

In some embodiments, the density of the shell layer is 3 g/cm³ to 5.6 g/cm³. The shell layer is mainly used for display, and those skilled in the art can choose appropriate color-developing materials for different display needs, but for the same color display, the lower the density of the material, the lower the density of the prepared electrophoretic particle.

In some embodiments, the density of the plurality of core particles is 1 g/cm³ to 2.8g/cm³. By reducing the density of the core particles, it is conductive to reducing the density of the electrophoretic particle, improving the dispersion stability of the electrophoretic particles, and making the resulting device have a better steady-state effect. Those skilled in the art can also understand that, when selecting the core particles, the matching degree and the binding stability between the core particles and the shell layer should also be considered.

In some embodiments, the electrophoretic particle has a particle size of 300 nm to 1000 nm, such that the electrophoretic particles can move rapidly under the action of an electric field, ensuring excellent properties of the prepared device. Under the action of the electric field, if the particle size of the electrophoretic particle is too large, the moving velocity of the electrophoretic particle will be too slow, which will easily lead to poor display effect of the device, which is not conducive to use. In some specific embodiments, the particle size of the electrophoretic particle may be selected from 300 nm, 350 nm, 400 nm, 450 nm, 500 nm, 550 nm, 600 nm, 650 nm, 700 nm, 750 nm, 800 nm, 850 nm, 900 nm, 950 nm, or 1000 nm.

In some embodiments, each of the plurality of core particles has a particle size of 10 nm to 50 nm. In a case where the particle size of the electrophoretic particle is ensured to be constant, the content of the core particles can be controlled by controlling the particle sizes of the core particles, which is beneficial to control the dispersion stability of the electrophoretic particles and improve the compactness of the shell layer. If the particle sizes of the core particles are too small, agglomeration of the core particles may be easily resulted, which is not conducive to the formation of the core layer; and if the particle sizes of the core particles are too large, it is difficult to form a structure of multiple core particles, which affects the properties of the electrophoretic particles.

In some specific embodiments, the particle size of each of the plurality of core particles is 10 nm, 15 nm, 20 nm, 25 nm, 30 nm, 35 nm, 40 nm, 45 nm, or 50 nm.

In some embodiments, a material of the shell layer has a visible light reflectivity of greater than 70%, or the material of the shell layer has a visible light absorptivity of greater than 80%.

In some embodiments, when being used to prepare an electrophoretic particle which adopts a reflective property of the particle for displaying, such as displaying the white color, etc., the material of the shell layer includes a material having relatively high light reflectivity and relatively low light transmissivity. In some embodiments, the material of the shell layer for preparing the white electrophoretic particle has a visible light reflectivity of greater than 70%, and a material having a visible light reflectivity of greater than 70% is selected as the shell layer material, which can reflect more than 70% of the external light, and is beneficial to improve the display effect of the white electrophoretic particle.

In some embodiments, when being used to prepare an electrophoretic particle which adopts the light absorption property of the particle for displaying, such as displaying the black color, etc., the material of the shell layer includes a material having relatively high light absorptivity. In some embodiments, the material of the shell layer for preparing the black electrophoretic particle has a visible light absorptivity of greater than 80%, and a material having a visible light absorptivity of greater than 80% is selected as the shell layer material, which can absorb more than 80% of the external light, and is beneficial to improve the display effect of black electrophoretic particle.

In some embodiments, the material of the shell layer comprises an inorganic pigment. Since the obtained electrophoretic particle adopts a shell layer display mode, therefore, in the core-shell structured particle adopting the shell layer displaying, the material of the shell layer generally adopts a material having a relatively high light reflectivity and a relatively low light transmissivity, or a material having a relatively low light absorptivity.

In some embodiments, the inorganic pigment comprises at least one of titanium dioxide, zirconium oxide, zinc oxide, copper chrome black, and iron manganese black. Due that the inorganic pigment itself has high light reflectivity or absorptivity, the shell layer of the electrophoretic particle prepared by using the inorganic pigment is able to reflect or absorb a large amount of light, preventing the resulting electrophoretic particle from occurring the light leakage phenomenon.

In some embodiments, the core particles comprise inorganic particles or organic particles. In some embodiments, a material of the inorganic particles comprises at least one of silicon dioxide, aluminum oxide, and magnesium oxide. In some embodiments, a material of the organic particles comprises at least one of polymethylmethacrylate, polystyrene, and polyvinylpyrrolidone.

In some specific embodiments, the electrophoretic particle includes but is not limited to: any one of an electrophoretic particle formed by wrapping SiO₂ core particles with a Fe₃O₄ shell layer material, an electrophoretic particle formed by wrapping SiO₂ core particles with a TiO₂ shell layer material, and an electrophoretic particle formed by formed by wrapping PMMA core particles with a TiO₂ shell layer material. Those skilled in the art can further determine the material of the core particle according to the selection of the shell layer material, so as to ensure strong binding stability between each of the core particles and the shell layer material, so as to obtain the electrophoretic particle having excellent properties.

A second aspect of embodiments of the present application provides a method for preparing electrophoretic particles, as shown in FIG. 1, the method comprises the steps of:
providing the plurality of core particles and a precursor material for preparing the shell layer; and
dispersing the plurality of core particles in an organic solvent to obtain a first core particle dispersion; mixing the precursor material and an organic solvent to obtain a first precursor material mixed solution; and dropping the first precursor material mixed solution into the first core particle dispersion for mixing and heating reaction to obtain electrophoretic particles;
or alternatively,
providing the plurality of core particles and a precursor material for preparing the shell layer; and
dispersing the plurality of core particles and an organic solvent to obtain a second core particle dispersion having a saturated concentration; mixing the precursor material with an organic solvent to obtain a second precursor material mixed solution, in which, the second precursor material mixed solution has a mass percent concentration of 5% to 35%; and dropping the second core particle dispersion into the second precursor material mixed solution for mixing and heating reaction to obtain electrophoretic particles.

The preparation method for the electrophoretic particles provided in the second aspect of the embodiments of the present application includes two different preparation ways, and the two different preparation ways are used for the preparation. Both the preparation ways are simple, convenient, and easy to operate. By using the preparation method, electrophoretic particles being sensitive in movement and having strong dispersion stability without light leakage can be prepared, which is suitable for large-scale preparation.

In some embodiments, the preparation method for the electrophoretic particles includes the following steps:
S01. providing the plurality of core particles and a precursor material for preparing the shell layer; and
S02. dispersing the plurality of core particles in an organic solvent to obtain a first core particle dispersion; mixing the precursor material and an organic solvent to obtain a first precursor material mixed solution; and dropping the first precursor material mixed solution into the first core particle dispersion for mixing and heating reaction to obtain electrophoretic particles.

In the above preparation method, the core particle dispersion and the precursor material mixed solution for preparing the shell layer are separately obtained; then the precursor material mixed solution is dropped into the core particle dispersion, and a resulting mixture were heated to promote the deposition of the precursor material onto the surfaces of the core particles so as to form a single shell layer, whereby obtaining the electrophoretic particles.

In step S01, the precursor material for preparing the shell layer and the core particles are provided.

In some embodiments, the material of the core particles includes any one or more of silicon dioxide, aluminum oxide, magnesium oxide, polymethylmethacrylate, polystyrene, and polyvinylpyrrolidone.

In some embodiments, the precursor material comprises any one or more of ethyl titanate, isopropyl titanate, tetrabutyl titanate, titanium tetrachloride, zirconium propanol, ferric chloride, ferrous sulfate, zinc nitrate, zinc chloride, zinc sulfate, copper nitrate, and chromium nitrate.

In some specific embodiments, the precursor material is selected from ethyl titanate, and the provided ethyl titanate is hydrolyzed in an organic solvent and a weak base solution to form hydroxyl groups on surfaces of the titanium atoms. During the mixing process with the core particle dispersion, ethyl titanate is prone to adsorb with the hydroxyl groups on the surfaces of the core particles, thus being deposited onto the surfaces of the core particles and forming a single shell layer material.

In step S02, the plurality of core particles are dispersed into the organic solvent to obtain a first core particle dispersion. Herein, the core particles are dispersed into the organic solvent to obtain the core particle dispersion, in which, hydroxyl groups are formed on the surfaces of the core particles, which is beneficial to binding with the shell layer material. Subsequent ultrasonic treatment is performed to control the finally formed electrophoretic particles to have a structure including multiple core particles.

In some embodiments, the organic solvent includes but is not limited to methanol and ethanol.

In some embodiments, the first core particle dispersion is further subjected to an ultrasonic treatment, in which, a duration for the ultrasonic treatment is 20 mins to 2 hrs. By controlling the duration for the ultrasonic treatment, the number of core particles contained in the resulting electrophoretic particles can be controlled.

Further, the precursor material and the organic solvent are mixed to obtain a first precursor material mixed solution.

In some embodiments, according to the precursor material, a hydrolysis aid can be added appropriately to make the subsequent synthesis steps go smoothly. In some specific embodiments, when the precursor material is selected from ethyl titanate, a weak base solution may be added during the reaction to promote the hydrolysis of ethyl titanate in the solution.

Further, the first precursor material mixed solution is dropped into the first core particle dispersion for a mixing and heating reaction to obtain electrophoretic particles.

In some embodiments, a rate of the dropping is controlled at 0.1 mL/s to 0.12 mL/s. A suitable dropping rate is adopted, such that the precursor material is hydrolyzed and deposited on the surfaces of the core particles, forming electrophoretic particles in structures each including a single shell layer and multiple core particles.

In some embodiments, a temperature of the heating reaction treatment is 50°C to 55°C. By controlling the temperature of the heating reaction treatment, it is beneficial to control the formation of the shell layer. In case that the heating temperature is too high, the reaction rate will be too high and the shell layer will be not dense enough; and in case that the reaction temperature is too low, the reaction efficiency will be too low, which is unfavorable for industrial production and preparation.

In some embodiments, the duration for the heating reaction treatment is 24 hrs to 26 hrs. By controlling the duration for the heating reaction treatment, it is conducive to the formation of a complete shell layer structure. If the reaction duration is too short, defects may appear in the formed shell layer; and if the reaction duration is too long, the formed shell layer will be too thick, which is not conducive to the reduction of the density of electrophoretic particles. In addition, too long a reaction duration may also result in too low reaction efficiency, which is not conducive to industrial production and preparation.

In other embodiments, the preparation method for the electrophoretic particles includes the following steps:
G01. providing the plurality of core particles and a precursor material for preparing the shell layer; and
G02. dispersing the plurality of core particles and an organic solvent to obtain a second core particle dispersion having a saturated concentration; mixing the precursor material with an organic solvent to obtain a second precursor material mixed solution, in which, the second precursor material mixed solution has a mass percent concentration of 5% to 35%; and dropping the second core particle dispersion into the second precursor material mixed solution for mixing and heating reaction to obtain electrophoretic particles.

In the above preparation method, the core particle dispersion having the saturated concentration and the precursor material mixed solution used for preparing the shell layer are separately provided, and the core particle dispersion having the saturated concentration is dropped into the precursor material mixed solution having a relatively low concentration, the particle dispersion does not diffuse rapidly, so that the high concentration solution and the low concentration solution are mixed into a homogeneous solution, and it can be ensured that electrophoretic particles each containing multiple core particles are formed.

In step G01, the plurality of core particles and a precursor material for preparing the shell layer are provided. Herein, the selection of core particles and the shell layer material precursor is consistent with those provided in step S01 , and will not be repeated herein.

In step G02, the plurality of core particles are dispersed into the organic solvent to obtain the second core particle dispersion having a saturated concentration; the precursor material is mixed with an organic solvent to obtain a second precursor material mixed solution, in which, the second precursor material mixed solution has a mass percent concentration of 5% to 35%; and the second core particle dispersion is dropped into the second precursor material mixed solution for mixing and heating reaction to obtain electrophoretic particles.

In some embodiments, the organic solvent includes but is not limited to methanol and ethanol.

In some embodiments, the precursor material and the organic solvent are mixed to obtain a second precursor material mixed solution, in which, the second precursor material mixed solution has a mass percent concentration of 5% to 35%. The mass percent concentration of the second precursor material mixed solution is controlled to be relatively low, so that the high concentration solution and the low concentration solution are mixed into a homogeneous solution, and it can be ensured that electrophoretic particles each containing multiple core particles are formed.

In some embodiments, the second core particle dispersion is dropped into the second precursor material mixed solution to perform a mixing and heating reaction to obtain electrophoretic particles. In this reaction step, the core particle dispersion having the saturated concentration is dropped into the second precursor material mixed solution having a relatively low concentration, the particle dispersion does not diffuse rapidly, so that the high concentration solution and the low concentration solution are mixed into a homogeneous solution, and it can be ensured that electrophoretic particles each containing multiple core particles are formed.

In some embodiments, the rate of the dropping is controlled at 0.1 mL/s to 0.12 mL/s. By adopting a suitable dropping rate, the core particle dispersion having the saturated concentration is dropped into the shell layer material precursor solution having a relatively low concentration, the core particle dispersion does not diffuse rapidly, so that the high concentration solution and the low concentration solution are mixed into a homogeneous solution, and formation of electrophoretic particles each containing multiple core particles is ensured.

In some embodiments, a temperature of the heating reaction treatment is 50°C to 55°C. By controlling the temperature of the heating reaction treatment, it is beneficial to control the formation of the shell layer. In case that the heating temperature is too high, the reaction rate will be too high and the shell layer will be not dense enough; and in case that the reaction temperature is too low, the reaction efficiency will be too low, which is unfavorable for industrial production and preparation.

In some embodiments, the duration for the heating reaction treatment is 24 hrs to 26 hrs. By controlling the duration for the heating reaction treatment, it is conducive to the formation of a complete shell layer structure. If the reaction duration is too short, incompleteness and defects may appear in the formed shell layer; and if the reaction duration is too long, the reaction efficiency may be too low, which is not conducive to industrial production and preparation.

In some embodiments, the prepared electrophoretic particles can be further grafted with an organic matter, so as to facilitate subsequent charged use.

In some specific embodiments, KH570 is grafted on surfaces of the electrophoretic particles, and the specific preparation method includes the following steps:
D01. providing γ-methacryloxypropyltrimethoxysilane (KH570) and an organic solvent and mixing the two to obtain a KH570 solution; and dispersing electrophoretic particles in an organic solvent to obtain an electrophoretic particle dispersion; and
D02. dropping the KH570 solution to the electrophoretic particle dispersion, enabling a resulting mixture to react at a temperature of 50°C to 55°C for 1 hr to 2 hrs, followed with filtering, washing, and drying treatments, whereby obtaining electrophoretic particles grafted with KH570.

In some embodiments, the organic solvent includes but is not limited to methanol and ethanol.

In some specific embodiments, PDMC is grafted on the surfaces of electrophoretic particles, and specific preparation method includes the following steps:
R01. mixing the electrophoretic particles grafted with KH570 and an organic solvent to obtain a dispersion of electrophoretic particles grafted with KH570;
R02. mixing azobisisobutyronitrile AIBN, methacryloyloxyethyltrimethylammonium chloride (DMC), and an organic solvent to obtain a charged mixed solution;
R03. dropping the charged mixed solution to the dispersion of the electrophoretic particles grafted with KH570, to enable a resulting mixture to react at a temperature of 80°C for 8 hrs to 8.5 hrs, followed with filtering, washing, and drying treatments, whereby obtaining electrophoretic particles grafted with positively charged polymethacryloyloxyethyltrimethylammonium chloride PDMC on surfaces thereof.

A third aspect of embodiments of the present application provides an electrophoretic display liquid. The electrophoretic display liquid comprises electrophoretic particles. The electrophoretic particles are selected from the electrophoretic particles or prepared by the method for preparing the electrophoretic particles.

The electrophoretic display liquid provided by the third aspect of the present application includes the above-mentioned electrophoretic particles that are sensitive in movement and have strong dispersion stability without light leakage. Therefore, the obtained electrophoretic display liquid has excellent performance and is conducive to wide application.

A fourth aspect of embodiments of the present application provides a display electronic paper. The display electronic paper comprises electrophoretic particles. The electrophoretic particles are selected from the electrophoretic particles or prepared by the method for preparing the electrophoretic particles.

The display electronic paper provided by the fourth aspect of the present application includes the above-mentioned electrophoretic particles that are sensitive in movement and have strong dispersion stability without light leakage. Therefore, the obtained display electronic paper has excellent display effect and is conducive to wide application.

Hereinbelow, the application will be described in detail in conjunction with specific examples.

### Example 1

### Electrophoretic particle and preparation method therefor

The electrophoretic particle comprises a shell layer and a core layer wrapped in the shell layer. The core layer comprises a plurality of core particles, and voids exist among the plurality of core particles. The plurality of core particles are silicon dioxide, and the shell layer is titanium dioxide. Each of the plurality of core particles has a particle size of 10 nm; the electrophoretic particle has a particle size of 300 nm; a volume of the core layer accounts for 30% of the volume of the electrophoretic particle, and a volume of the voids account for 5% of the volume of the core layer.

### Preparation method for electrophoretic particle

Core particles and a shell layer material precursor were provided according to the electrophoretic particle according to Example 1.
8 g of silica nanoparticles and 50 g of absolute ethanol were fully dispersed and stirred, and then performed with ultrasonic treatment for 20 mins to obtain a first core particle dispersion;
ethyl titanate, absolute ethanol, and ammonia water having a concentration of 50% were mixed to obtain a first shell layer material precursor mixed solution; and
the first shell layer material precursor mixed solution was dropped into the first core particle dispersion for mixing and heating reaction, in which, the rate of dropping was 0.1 mL/s, the temperature of the mixing and heating reaction was 50°C, and the duration for the mixing and heating reaction was 24 hrs, such that electrophoretic particles in a multi-core type core-shell structure were obtained.

### Example 2

### Electrophoretic particle and preparation method therefor

The electrophoretic particle comprises a shell layer and a core layer wrapped in the shell layer. The core layer comprises a plurality of core particles, and voids exist among the plurality of core particles. The plurality of core particles are silicon dioxide, and the shell layer is titanium dioxide. Each of the plurality of core particles has a particle size of 20 nm; the electrophoretic particle has a particle size of 400 nm; a volume of the core layer accounts for 35% of the volume of the electrophoretic particle, and a volume of the voids account for 6% of the volume of the core layer.

### Preparation method for electrophoretic particle

Core particles and a shell layer material precursor were provided according to the electrophoretic particle according to Example 2.
8 g of silica nanoparticles and 50 g of absolute ethanol were fully dispersed and stirred to obtain a core particle dispersion having a saturated concentration;
ethyl titanate, absolute ethanol, and ammonia water having a concentration of 50% were mixed to obtain a shell layer material precursor mixed solution, in which the shell layer material precursor mixed solution had a mass percent content of 30%; and
the core particle dispersion was dropped into the shell layer material precursor mixed solution for mixing and heating reaction, in which, the rate of dropping was 0.1 mL/s, the temperature of the mixing and heating reaction was 50°C, and the duration for the mixing and heating reaction was 24 hrs, such that electrophoretic particles in a multi-core type core-shell structure were obtained.

### Example 3

### Electrophoretic particle and preparation method therefor

The electrophoretic particle comprises a shell layer and a core layer wrapped in the shell layer. The core layer comprises a plurality of core particles, and voids exist among the plurality of core particles. The plurality of core particles are alumina, and the shell layer is titanium dioxide. Each of the plurality of core particles has a particle size of 30 nm; the electrophoretic particle has a particle size of 500 nm; a volume of the core layer accounts for 40% of the volume of the electrophoretic particle, and a volume of the voids account for 10% of the volume of the core layer.

The preparation method included the same operations as in Example 1 except that ammonia water having a concentration of 50% was replaced with urea to obtain the corresponding nanoparticles in core-shell structures.

### Example 4:

### Electrophoretic particle and preparation method therefor

The electrophoretic particle comprises a shell layer and a core layer wrapped in the shell layer. The core layer comprises a plurality of core particles, and voids exist among the plurality of core particles. The plurality of core particles are magnesium oxide, and the shell layer is titanium dioxide. Each of the plurality of core particles has a particle size of 35 nm; the electrophoretic particle has a particle size of 500 nm; a volume of the core layer accounts for 50% of the volume of the electrophoretic particle, and a volume of the voids account for 12% of the volume of the core layer.

The preparation method included the same operations as in Example 1 except that ammonia water having a concentration of 50% was replaced with hexamethylenetetramine to obtain the corresponding nanoparticles in core-shell structures.

### Example 5:

### Electrophoretic particle and preparation method therefor

The electrophoretic particle comprises a shell layer and a core layer wrapped in the shell layer. The core layer comprises a plurality of core particles, and voids exist among the plurality of core particles. The plurality of core particles are polymethylmethacrylate, and the shell layer is titanium dioxide. Each of the plurality of core particles has a particle size of 40 nm; the electrophoretic particle has a particle size of 700 nm; a volume of the core layer accounts for 70% of the volume of the electrophoretic particle, and a volume of the voids account for 13% of the volume of the core layer.

The preparation method included the same operations as in Example 1, except that ammonia water having a concentration of 50% was replaced by hexamethylenetetramine, and the ethanol solution at room temperature was replaced by ethanol solution at 0°C to obtain the corresponding nanoparticles in core-shell structures.

### Example 6:

### Electrophoretic particle and preparation method therefor

The electrophoretic particle comprises a shell layer and a core layer wrapped in the shell layer. The core layer comprises a plurality of core particles, and voids exist among the plurality of core particles. The plurality of core particles are silicon dioxide, and the shell layer is titanium dioxide. Each of the plurality of core particles has a particle size of 45 nm; the electrophoretic particle has a particle size of 800 nm; a volume of the core layer accounts for 70% of the volume of the electrophoretic particle, and a volume of the voids account for 5% of the volume of the core layer.

The preparation method included the same operations as in Example 2, except that ammonia water having a concentration of 50% was replaced by hexamethylenetetramine, and the dropping rate of the ethanol solution was changed from 0.1 mL/s to 0.12 mL/s to obtain the corresponding nanoparticles in core-shell structures.

### Example 7:

### Electrophoretic particle and preparation method therefor

The electrophoretic particle comprises a shell layer and a core layer wrapped in the shell layer. The core layer comprises a plurality of core particles, and voids exist among the plurality of core particles. The plurality of core particles are silicon dioxide, and the shell layer is titanium dioxide. Each of the plurality of core particles has a particle size of 50 nm; the electrophoretic particle has a particle size of 1000 nm; a volume of the core layer accounts for 80% of the volume of the electrophoretic particle, and a volume of the voids account for 15% of the volume of the core layer.

The preparation method included the same operations as in Example 2, except that ammonia water having a concentration of 50% was replaced by hexamethylenetetramine, and the reaction duration after the dropping addition was changed to 26 hrs to obtain the corresponding nanoparticles in core-shell structures.

### Comparative Example 1

### Electrophoretic particle and preparation method therefor

The electrophoretic particles are nanoparticles having single-core type core-shell structures, the core particle is silicon dioxide, and the shell layer is titanium dioxide; the core particle has a particle size of 5 nm; the electrophoretic particle has a particle size of 500 nm, and a volume of the core layer accounts for 90% of the volume of the electrophoretic particle.

The preparation method included the same operations as in Example 1 to obtain the corresponding nanoparticles in core-shell structure.

### Comparative Example 2

### Electrophoretic particle and preparation method therefor

The electrophoretic particles are nanoparticles having single-core type core-shell structures, the core particle is silicon dioxide, and the shell layer is titanium dioxide; the core particle has a particle size of 100 nm; and the shell layer has a thickness of 200 nm.

The preparation method included the same operations as in Example 2 to obtain the corresponding nanoparticles in the single-core type core-shell structures.

The electrophoretic particles provided by Examples 1-7 and Comparative Examples 1-2 were performed with charged grafting, and the method for the charged grafting was performed by the following steps:
γ-methacryloxypropyltrimethoxysilane (KH570) and an organic solvent were provided and mixed to obtain a KH570 solution; electrophoretic particles obtained in Examples 1-7 and Comparative Examples 1-2 were each respectively dispersed in an organic solvent to obtain the electrophoretic particle dispersions; the KH570 solution was dropped into the electrophoretic particle dispersions respectively, and resulting mixtures were enabled to react at a temperature of 50°C to 55°C for 1 hr to 2 hrs, followed with filtering, washing, and drying treatments, whereby obtaining electrophoretic particles grafted with KH570 respectively including the electrophoretic particles obtained in Examples 1-7 and Comparative Examples 1-2; and
the electrophoretic particles grafted with KH570 were mixed with an organic solvent to obtain a dispersion of electrophoretic particles grafted with KH570; azobisisobutyronitrile AIBN, methacryloyloxyethyltrimethylammonium chloride (DMC), and an organic solvent were mixed to obtain a charged mixed solution; the charged mixed solution was dropped into the dispersion of the electrophoretic particles grafted with KH570, to enable a resulting mixture to react at a temperature of 80°C for 8 hrs to 8.5 hrs, and then filtered, washed and dried to obtain electrophoretic particles grafted with positively charged polymethacryloyloxyethyltrimethylammonium chloride PDMC on surfaces thereof including the electrophoretic particles obtained in Examples 1-7 and Comparative Examples 1-2.

### Performance Testing

Electrophoretic particles grafted with positively charged polymethacryloyloxyethyltrimethylammonium chloride PDMC on surfaces thereof including the electrophoretic particles obtained in Examples 1-7 and Comparative Examples 1-2 were displayed in a full white display mode and a normal working mode respectively, to measure a white L value of the electronic paper diaphragm, in which, the white L value of the comparative example was defined as 70. In the full white mode, five points on the screen were selected to calculate an average value thereof, and the five points included points at the four corners and at the center respectively. In the working mode, similarly, five points on the screen were also selected to calculate the average value thereof, and the five points included points at the four corners and at the center respectively. Since the display effect in the working mode is black and white display effect, the points to be selected should avoid black areas. In this way, the data for the full white display mode and the normal working mode were obtained respectively, and provided a basis for calculations based on the data provided.

### Result analysis

Electrophoretic particles grafted with positively charged polymethacryloyloxyethyltrimethylammonium chloride PDMC on surfaces thereof including the electrophoretic particles obtained in Examples 1-7 and Comparative Examples 1-2 were displayed in the full white display mode and the normal working mode respectively, to measure a white L value of the electronic paper, the results of which were listed in Table 1. The white effect for the comparative example in Table 1 was defined as 70. It can be seen from the results in Table 1 that the white display effects of the electrophoretic particles obtained in Examples 1 to 7 were better than those of the products provided by the comparative examples in both the full white display mode and the normal working mode.

Therefore, the electrophoretic particle provided by the embodiments of the present application is a particle containing a multi-core structure, and the number of groups on the surfaces of the core layer and the corresponding binding groups on the shell layer increases, which improves the bonding tightness between the shell layer and the core layer, and makes the shell layer of the resulting electrophoretic particle have relatively strong tightness. Based on this, the thickness of the shell layer can be appropriately reduced, thereby reducing the overall volume of the electrophoretic particle, which is conducive to the rapid movement of the electrophoretic particle under the action of an electric field, and can improve the white mode; moreover, the formed electrophoretic particle in the multi-core type core-shell structure has a smaller density, which not only improves the response speed of the electrophoretic particle, but also reduces the deposition velocity of the electrophoretic particle when the electric field is removed, improves the dispersion stability of the particles, and making a resulting device have a better steady-state effect.

### Table 1

[]

**[Table 1]**

| | L value at the full white display mode | L value at the working mode |
|---|---|---|
| Example 1 | 74.9 | 73.5 |
| Example 2 | 75.6 | 75.6 |
| Example 3 | 78.4 | 77 |
| Example 4 | 79.1 | 78.4 |
| Example 5 | 76.3 | 74.9 |
| Example 6 | 74.9 | 74.9 |
| Example 7 | 75 | 75 |
| Comparative Example 1 | 70 | 70 |
| Comparative Example 2 | 70 | 70 |

The above descriptions are only preferred embodiments of the application, and are not intended to limit the application. Any modifications, equivalent replacements, and improvements made within the spirit and principles of the present application should be included within the protection scope of the present application.

## Claims

1. An electrophoretic particle, wherein
the electrophoretic particle comprises a shell layer and a core layer wrapped in the shell layer,
the core layer comprises a plurality of core particles, and
a density of the plurality of core particles is lower than a density of the shell layer.

2. The electrophoretic particle according to claim 1, wherein in the core layer, voids exist among the plurality of core particles.

3. The electrophoretic particle according to claim 2, wherein a volume of the voids account for 5% to 15% of a volume of the core layer.

4. The electrophoretic particle according to claim 1, wherein a volume of the core layer accounts for 30% to 80% of a volume of the electrophoretic particle.

5. The electrophoretic particle according to claim 1, wherein the density of the plurality of core particles is lower than or equal to a half of the density of the shell layer.

6. The electrophoretic particle according to claim 5, wherein
the density of the shell layer is 3 g/cm³ to 5.6 g/cm³; and
the density of the plurality of core particles is 1 g/cm³ to 2.8g/cm³.

7. The electrophoretic particle according to any one of claims 1 to 6, wherein
the electrophoretic particle has a particle size of 300 nm to 1000 nm; and
each of the plurality of core particles has a particle size of 10 nm to 50 nm.

8. The electrophoretic particle according to any one of claims 1 to 6, wherein a material of the shell layer has a visible light reflectivity of greater than 70%, or the material of the shell layer has a visible light absorptivity of greater than 80%.

9. The electrophoretic particle according to any one of claims 1 to 6, wherein the material of the shell layer comprises an inorganic pigment, and the core particles comprise inorganic particles or organic particles.

10. The electrophoretic particle according to claim 9, wherein
a material of the inorganic particle comprises silicon dioxide;
a material of the organic particles comprises at least one of polymethylmethacrylate, polystyrene, and polyvinylpyrrolidone; and
the inorganic pigment comprises at least one of titanium dioxide, zirconium oxide, zinc oxide, copper chrome black, and iron manganese black.

11. A method for preparing electrophoretic particles according to any one of claims 1 to 10, comprising the steps of:
providing the plurality of core particles and a precursor material for preparing the shell layer; and
dispersing the plurality of core particles in an organic solvent to obtain a first core particle dispersion; mixing the precursor material and an organic solvent to obtain a first precursor material mixed solution; and dropping the first precursor material mixed solution into the first core particle dispersion for mixing and heating reaction to obtain electrophoretic particles;
or alternatively,
providing the plurality of core particles and a precursor material for preparing the shell layer; and
dispersing the plurality of core particles and an organic solvent to obtain a second core particle dispersion having a saturated concentration; mixing the precursor material with an organic solvent to obtain a second precursor material mixed solution, wherein the second precursor material mixed solution has a mass percent concentration of 5% to 35%; and dropping the second core particle dispersion into the second precursor material mixed solution for mixing and heating reaction to obtain electrophoretic particles.

12. The method for preparing the electrophoretic particles according to claim 11, wherein the precursor material comprises any one or more of ethyl titanate, isopropyl titanate, tetrabutyl titanate, titanium tetrachloride, zirconium propanol, ferric chloride, ferrous sulfate, zinc nitrate, zinc chloride, zinc sulfate, copper nitrate, and chromium nitrate.

13. The method for preparing the electrophoretic particles according to claim 11, wherein
the first core particle dispersion is further subjected to an ultrasonic treatment, wherein a duration for the ultrasonic treatment is 20 mins to 2 hrs;
a rate of the dropping is controlled at 0.1 mL/s to 0.12 mL/s; and
a temperature of the mixing and heating reaction is 50°C to 55°C, and a duration for the mixing and heating reaction is 24 hrs to 26 hrs.

14. An electrophoretic display liquid, wherein the electrophoretic display liquid comprises electrophoretic particles, wherein the electrophoretic particles are selected from the electrophoretic particles according to any one of claims 1 to 10 or prepared by the method for preparing the electrophoretic particles according to any one of claims 11 to 13.

15. A display electronic paper, wherein the display electronic paper comprises electrophoretic particles, wherein the electrophoretic particles are selected from the electrophoretic particles according to any one of claims 1 to 10 or prepared by the method for preparing the electrophoretic particles according to any one of claims 11 to 13.
